# EUROPEAN PATENT APPLICATION

(11) **EP 3 014 987 A1**
(43) Date of publication of application: **04.05.2016**
(21) Application number: 15192385.1
(22) Date of filing: 30.10.2015
(51) Int. Cl.: A01K 5/01

(54) **DEVICE FOR STORING, TRANSPORTING, AND PROVIDING FOOD OR LIQUIDS TO PETS**

(30) Priority: 30.10.2014 CL 2014002965
(71) Applicant: Rosales Peralta, Antonio, Santiago, RM (CL)
(72) Inventor: Rosales Peralta, Antonio, Santiago, RM (CL)
(74) Representative: Carvajal y Urquijo, Isabel

(57) **Abstract**

The present invention refers to a device for storing, transporting, and providing food or liquids to pets wherein the device consists of two items: a) a disposable container with an aluminum seal (2) or similar, with a detachable flap and a threaded lid; and a b) base of a diameter greater than the container and the container fits therein perfectly thus preventing its movement once the contents in the device are used. The base can have a hole in the edge as to assist with the transportation. Usage of either the food or liquid contained inside the container takes place after the lid and seal are removed, and the container can be closed again when placing the threaded lid, thus facilitating transportation of the food or liquid remaining in the container without spillage of any kind.

## Description

### Field of the invention

The present invention refers to a device for storing, transporting, and providing food or liquids to pets, which is based on a disposable container with an aluminum seal or similar and a base of a diameter greater than the container. Usage of a food or liquid contained inside the container takes place after removing the lid and seal. Then, the container can be closed again when placing the threaded lid, thus facilitating transportation of the food or liquid remaining in the container without spillage of any kind.

### Prior Art

Currently liquids for dogs or pets available in the market are available in plastic bottles wherein there liquid contained inside the container needs to be transferred into a different container, such as a plate, as to make possible the pet to drink such liquid. The action above described is inconvenient, as it is necessary to carry two different containers, i.e., the bottle and the additional container. Also, there is granulated material commercially available which is used to change the flavor, add nutrients to the water the pets drink which therefore makes necessary to have a different container to be used to place the water as to then add the granulated material or nutrients. As conventional containers for pet food are not provided with a plastic threaded lid or cap, it is not possible to store and carry the remaining liquid or food without spilling such liquid or food. In addition, the plate is not provided with a support base and pets usually turn over such plates with their paws and legs. Also, the plates that are available in the market are not provided with a hole as to make it easier to carry it around. Lastly, the design of the base is such that it takes into account the pet placing the front legs on it, thus preventing movement of the container and allowing the pet to use the contents without producing any spillage.

### Description of the invention

The device of the invention consists of a container which is round in shape and that is provided with an aluminum seal or similar on the mouth as to preserve the contents and provided with a plastic threaded lid or cap which allows to store and carry the container once such container has been opened. The container is attached to a base wherein the pet places its front legs thus preventing movement of the device and allowing the pet to use the contents of the device without having any spillage. The base can be provided or not with a hole on the side of the base as to facilitate carrying the device around.

The solution proposed in the present application is mainly targeted to provide an appropriate container for a pet as to facilitate that the pet can drink the liquid or eat the food without the need of completely emptying any given product onto a plate for further drinking or eating by the pet. Also, it is disposable in nature. Accordingly, it is not necessary to wash it after it has been used; it is provided with a seal as to appropriately preserve its vacuum-sealed contents. It is also provided with a threaded lid as to be able to transport the rest of the contents inside the container without nay spillage, and it is also provided with a base that prevents movement of the container and which renders the container flat and stable.

### Brief description of the figures

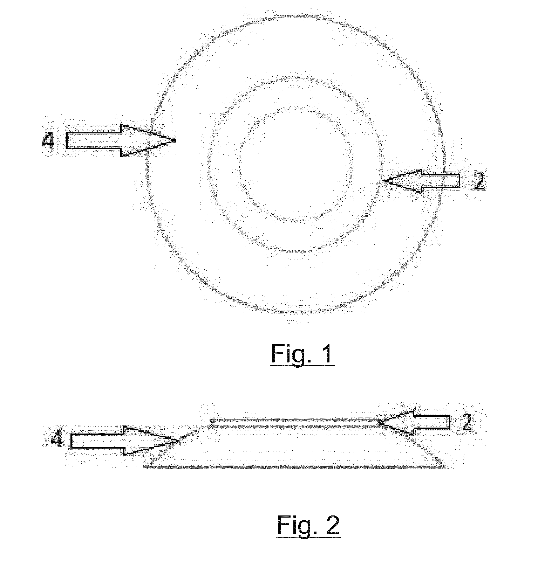

Figure 1: Illustrates s a plan view of the container.
Figure 2: Illustrates a front view of the container.

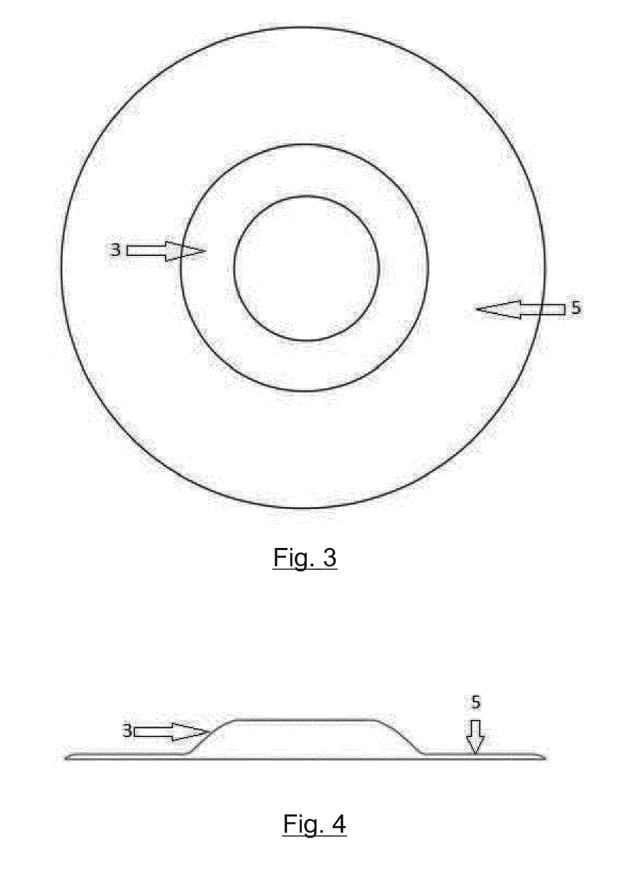

Figure 3: Illustrates a plan view of the base.
Figure 4: Illustrates a front view of the base.

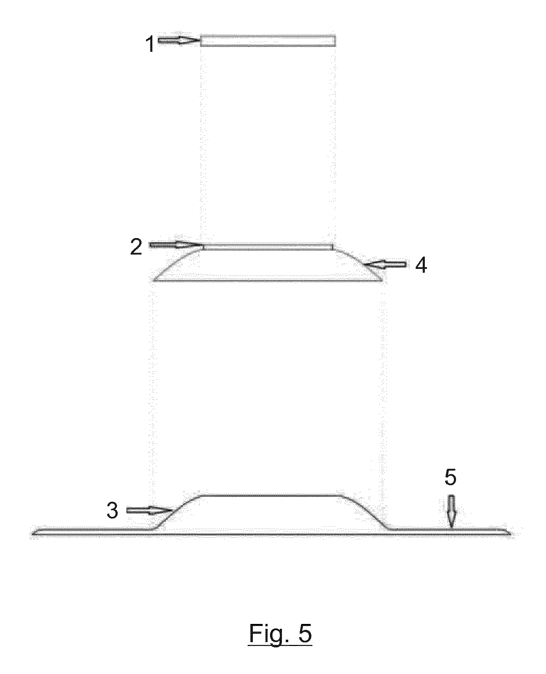

Figure 5: Illustrates a front view of the device before being assembled.

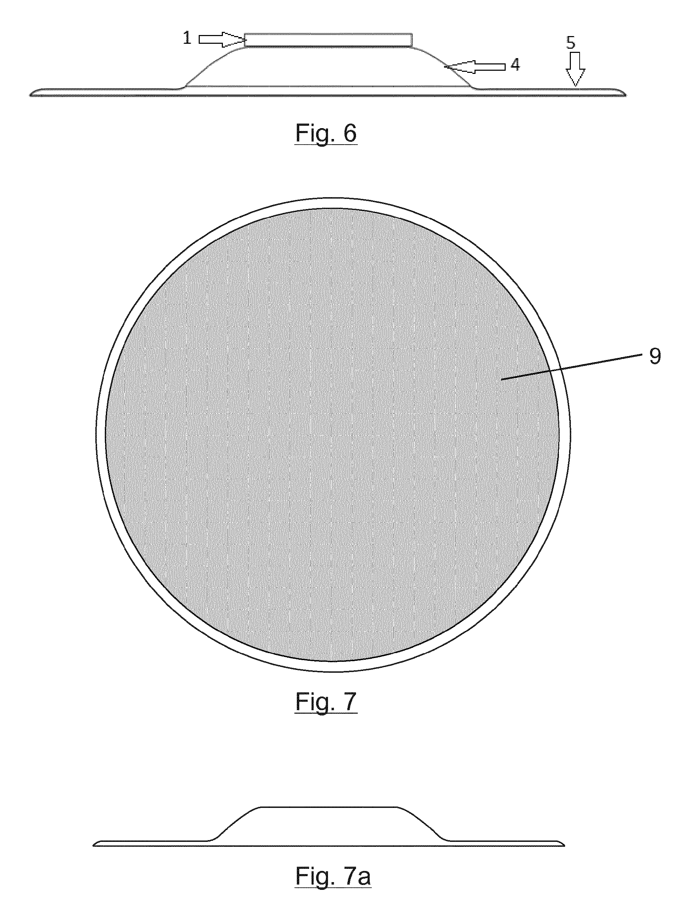

Figure 6: Illustrates the complete device assembled.
Figures 7 and 7a: Illustrate a plan view and a front view respectively showing the slippery material provided underneath the bottom portion of the base.

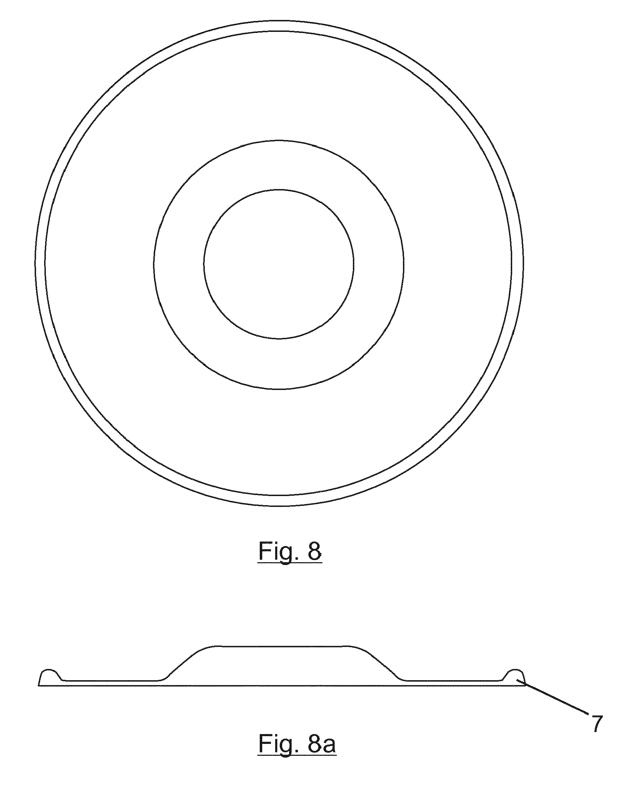

Figures 8 and 8a: Illustrate a plan view and a front view respectively showing the perimeter projection 7.

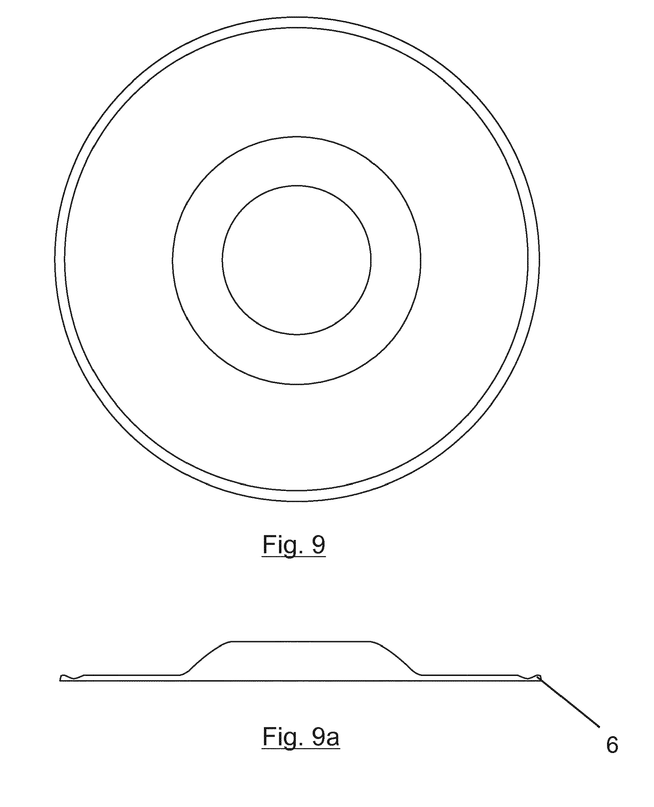

Figures 9 and 9a: Illustrate a plan view and a front view respectively showing the perimeter groove.

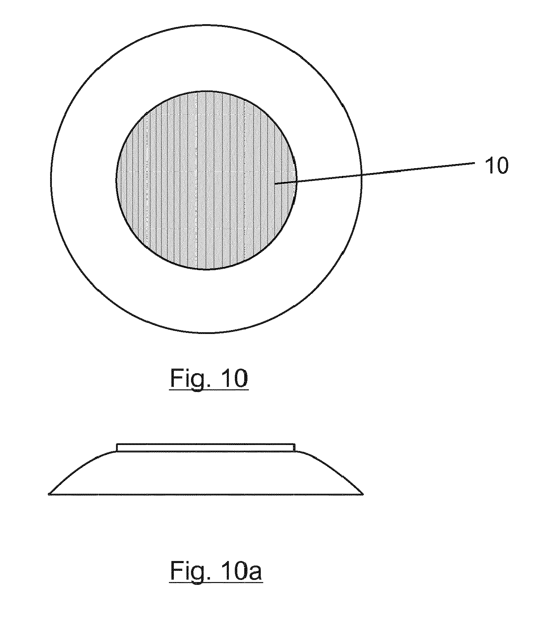

Figures 10 and 10a: Illustrate a plan view and a front view respectively showing the slippery material provided in the outer lower portion of the container.

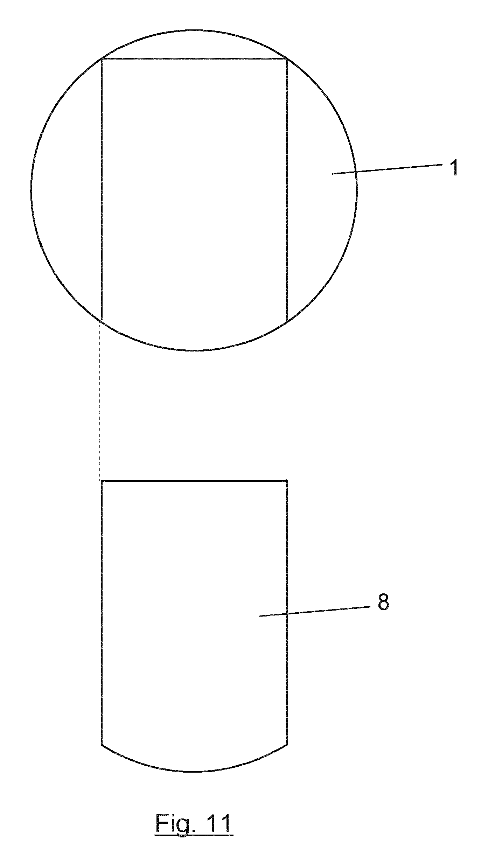

Figure 11: Illustrates a plan view showing the threaded lid 1 provided with anti-slippery section 8.

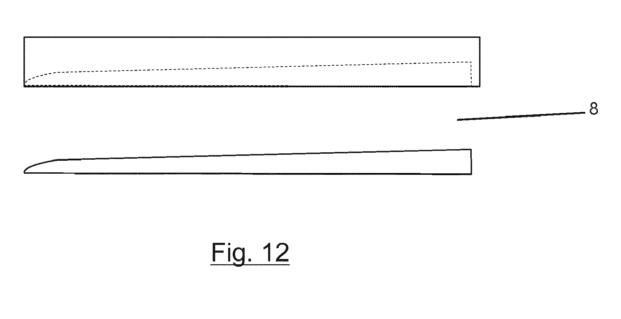

Figure 12: Illustrates a side view showing the threaded lid 1 provided with anti-slippery section 8.

### Detailed description of the invention

The device of the invention is provided with a container that has a shallow bottom which is provided with a plastic threaded lid (1) which is attached to the upper part of the container above the seal (2) which is attached thereof as to preserve the contents inside the container.

The base is provided with a shallow center wherein a central portion (3) is projected and that is of similar shape of the container and through which a perfect fit is provided in-between both the container and the base, thus preventing movement of the base. The container is provided on this side portion with a hole that can be used as a handle or grip (4), and the base is also provided with another hole which can also act as a handle or grip (5) wherein both handles provide a good grip to assist on the container be carried by an individual.

The container can be divided in two sections, one for the food and the other section for the liquid. Both sections are separated by a plate, thus keeping each other separated.

A preferred embodiment of the device is a base that is provided with a groove (6) that runs along the outer edge and which is intended to be filled with water, thus preventing ants and other insects to have access and climb the base and reach the container.

In other preferred embodiment of the invention the base is provided with a projection or bulge (7) that has the purpose of preventing spillage of food outside of the container.

In yet other preferred embodiment of the invention the threaded lid (1) is provided with a sliding section (8) which creates a flap or spatula which when removed acts as a tool to collect food spilled or feces of the animals feeding from the container.

The lower portion of the base in contact with the floor or surface where the base rests is provided with an anti-slippery material (9) as to prevent the base from moving when the animal is eating.

Also, the base is provided in its outer lower portion with an anti-slippery section (10) preventing the plate from moving or sliding when the plate is not placed inside the base as to feed the animal.

The complete assembly consisting of lid, container, and base is manufactured using different types of material such as polyethylene terephthalate (PET), high density polyethylene, low density polyethylene, polyvinyl chloride, polypropylene, polystyrene, poly(methyl methacrylate), white paper, cardboard, tetra pack, PET, other plastics, glass, aluminum, and other metals. It is also considered using one of the materials within those that are biodegradable as well as a material that are edible for pets and animals without causing any harm.

In a preferred embodiment of the invention the container is made up of any of the materials previously mentioned used in combination in the composition, either used as a coating or as a bath with copper or copper salts, thud providing the container with anti-bacterial properties.

The container can also be manufactured in different layers as to provide the inner walls inside the container with insulating material, thus providing protection against cold and hot room temperature. The container may be for example manufactured using polyethylene for the walls and can be filled with polyurethane in the inside as to provide the container with insulation properties.

## Claims

1. A device for storing, transporting, and providing food or liquids to pets **characterized in that** the device consists of a container provided with a shallow bottom part where a base is inserted, the base is provided with a convex center; wherein the container is provided with an aluminum seal (2) or similar, with a detachable flap that provides an effective way to preserve the contents of the container; a threaded lid (1) to provide carrying the contents of the container without having any spillage; is provided with a hole in the side part that acts as a handle (4) as to carry the device; wherein the base is provided with a central part (3) which projects from the base and which is convex in shape and which is of a smaller size than the shallow bottom of the container, thus providing the container with a more effective support, and wherein the pet can rest its front paws thus stabilizing and immobilizing the device, and wherein the base is also provided with a hole that acts as a handle (5).

2. A device for storing, transporting, and providing food or liquids to pets according to Claim 1 **characterized in that** the device can be divided in two sections by means of a separating plate.

3. A device for storing, transporting, and providing food or liquids to pets according to Claim 1 **characterized in that** said base is provided with a groove 6 that runs around the outer edge.

4. A device for storing, transporting, and providing food or liquids to pets according to Claim 1 **characterized in that** said threaded lid (1) is provided with a slippery section (8) which creates a flap or spatula.

5. A device for storing, transporting, and providing food or liquids to pets according to Claim 1 **characterized in that** said base is also provided with an anti-slippery material (9) on the part of the base that is in contact with the floor or surface where the base rests.

6. A device for storing, transporting, and providing food or liquids to pets according to Claim 1 **characterized in that** the container includes an anti-slippery section (10) in its outer lower portion.

7. A device for storing, transporting, and providing food or liquids to pets according to Claim 1 **characterized in that** said lid, container, and base are manufactured using different types of material such as polyethylene terephthalate (PET), high density polyethylene, low density polyethylene, polyvinyl chloride, polypropylene, polystyrene, poly(methyl methacrylate), white paper, cardboard, tetra pack, PET, other plastics, glass, aluminum, and other metals.

8. A device for storing, transporting, and providing food or liquids to pets according to Claim 1 **characterized in that** said lid, container, and base are manufactured using biodegradable materials.

9. A device for storing, transporting, and providing food or liquids to pets according to Claim 1 **characterized in that** said lid, container, and base are manufactured using material that is safe to eat by the animals.

10. A device for storing, transporting, and providing food or liquids to pets according to Claims 7-9 **characterized in that** said container is made up of any of the materials previously mentioned used in combination in the composition, either used as a coating or as a bath with copper or copper salts, thud providing the container with anti-bacterial properties.

11. A device for storing, transporting, and providing food or liquids to pets according to Claims 7-10 **characterized in that** said container can also be manufactured in different layers as to provide the inner walls inside the container with insulating material.
